# EUROPÄISCHE PATENTSCHRIFT

(11) **EP 1 090 319 B1**
(45) Veröffentlichungstag und Bekanntmachung des Hinweises auf die Patenterteilung: **18.12.2002**
(21) Anmeldenummer: 99929295.6
(22) Anmeldetag: 21.06.1999
(51) Int. Cl.: G02B 6/30

(54) **OPTISCHES KOPPLUNGSELEMENT**
OPTICAL COUPLING ELEMENT
ELEMENT DE COUPLAGE OPTIQUE

(30) Priorität: 20.06.1998 DE 19827553
(43) Veröffentlichungstag der Anmeldung: 11.04.2001
(73) Patentinhaber: INSTITUT FÜR MIKROTECHNIK MAINZ GmbH, 55129 Mainz-Hechtsheim (DE)
(72) Erfinder: PAATZSCH, Thomas, D-55116 Mainz (DE); SMAGLINSKI, Ingo, D-55122 Mainz (DE)
(74) Vertreter: Fuchs Mehler Weiss & Fritzsche
(86) Internationale Anmeldenummer: EP9904298
(87) Internationale Veröffentlichungsnummer: WO99067667

(56) Entgegenhaltungen:
- WO-A-98/57206
- US-A- 4 865 407
- US-A- 5 343 544
- PATENT ABSTRACTS OF JAPAN vol. 1995, no. 02, 31. März 1995 (1995-03-31) & JP 06 313823 A (KYOCERA CORP), 8. November 1994 (1994-11-08)
- PATENT ABSTRACTS OF JAPAN vol. 1996, no. 09, 30. September 1996 (1996-09-30) & JP 08 122561 A (FUJITSU LTD), 17. Mai 1996 (1996-05-17)

## Beschreibung

Die Erfindung betrifft ein optisches Kopplungselement, das einstückig abformtechnisch aus polymerem Wellenleitermantelmaterial gefertigt ist, mit mindestens je einem Führungsgraben für einen Lichtwellenleiter und eine Lichtleitfaser.

Solche Kopplungselemente können beispielsweise in der optischen Nachrichtentechnik oder in der Sensorik eingesetzt werden.

Die Übertragung von Signalen und Daten in der Nachrichtentechnik und Sensorik erfolgt zunehmend auf optischer Basis. Anstelle von elektrischen Verbindungen werden mit Hilfe von Lichtwellenleitern optische Verbindungen geschaffen, die in ihrer Gesamtheit ein optisches Netzwerk darstellen. Zum Aufbau eines solchen Netzes werden verschiedene Komponenten in großen Stückzahlen zu möglichst geringen Preisen benötigt; dazu zählen u.a. Verbindungen wie Stecker und Spleiße, Signalaufteiler wie Verzweiger, Wavelength-Division-Multiplexer (WDM) und Schalter.

Lichtwellenleiter setzen sich aus einem sogenannten Wellenleiterkern und einem Wellenleitermantel zusammen und sind in der Regel aus Glas oder Kunststoff. Der Transport des optischen Signals findet dabei im wesentlichen im Kern des Lichtwellenleiters statt. Je nach Übertragungswellenlänge und Größe bzw. Brechzahlen des Lichtwellenleiters werden eine oder mehrere optische Moden geführt. Insbesondere im Bereich der Sensorik und der Fernübertragung von Daten wird eine einmodige Übertragung benötigt, welche die Verwendung sogenannter einmodiger Lichtwellenleiter voraussetzt. Solche einmodigen Lichtwellenleiter weisen bei den gängigen Wellenlängen (0,4 - 1,6 µm) Kerndurchmesser im Bereich 2 - 10 µm auf.

Besonders hohe Anforderungen werden aufgrund der kleinen Kernabmessungen an die Verbindungen von einmodigen Lichtwellenleitern miteinander bzw. mit optischen Komponenten gestellt. Für Anwendungen in der optischen Nachrichtentechnik ist es dabei erforderlich, für die Position der Faser in lateraler Richtung eine Genauigkeit von ± 1 µm und für die Winkelausrichtung von ± 0,5° einzuhalten. Solche Toleranzen können beispielsweise für Faserbändchen-Stecker, die Flachkabel mit mehreren Lichtwellenleitern sind, dadurch erreicht werden, daß der Stecker mit Positionierstrukturen für die Lichtwellenleiter im Spritzgußverfahren unter Zuhilfenahme eines hochpräzisen, mikrotechnisch hergestellten Formwerkzeuges gefertigt wird [H.-D Bauer, L. Weber, W. Ehrfeld: "LIGA for Applications for Fibre Optics: High Precision Fibre Ribbon Ferrule"; MST News 10 (1994), S. 18-19].

Für die passive und aktive Verarbeitung von optischen Signalen kommen zunehmend auch integriert-optische Bauteile zum Einsatz. Dazu wird eine Lichtwellenleiter-Anordnung in ein Substrat integriert, welche eine bestimmte Funktion (Signalverzweigung, Schaltung etc.) erfüllt. Die Ankopplung von Lichtwellenleitern an das Bauteil unter Einhaltung der oben angegebenen Toleranzen kann z.B. durch einen aktiven oder semi-aktiven Montageprozeß der Bauteile erfolgen, in dem die Position der Faser durch Messung der eingekoppelten und am Ausgang gemessenen Lichtleistung variiert und dabei auf einen minimalen Verlust optimiert wird. Der Aufwand eines solchen Herstellungsverfahrens ist verhältnismäßig hoch.

Eine sehr kostengünstige Lösung für die Herstellung solcher Bauteile liegt in der Verwendung polymerer Materialien, welche in einem Abformverfahren wie z.B. Spritzguß, Spritzprägen, Heißprägen, Reaktionsguß etc. verarbeitet werden. In diesem Zusammenhang ist es besonders vorteilhaft, neben den wellenleitenden Bereichen auch Faserführungsbereiche in das Bauteil zu integrieren, in welche die Fasern ohne Nachjustage lediglich eingebracht werden müssen. Eine solche Faserankopplung bezeichnet man auch als selbstjustierende oder passive Faser-Chip-Kopplung.

Besonders vorteilhaft für die Herstellung der Bauelemente ist die Verwendung der LIGA-Technik. Diese Technik beinhaltet die 3 Verfahrensschritte Lithographie, Galvanik und Abformung. Im ersten Schritt wird ein Resist auf ein Substrat aufgebracht und durch eine geeignete Maske z.B. mit Synchrotronstrahlung belichtet. Nach der Entwicklung wird in den aus dem Resist herausgelösten Bereichen galvanisch Metall abgeschieden, wodurch ein Formeinsatz als Negativ der ursprünglichen Struktur entsteht. Dieser Formeinsatz wird in einem Abformverfahren (z.B. Spritzguß) zur Herstellung von Formteilen aus z.B. Kunststoff verwendet. Mit Hilfe der LIGA-Technik können Formteile mit einer sehr hohen Präzision (<1 µm) hergestellt werden. Eine detaillierte Beschreibung der LIGA-Technik findet sich beispielsweise in: W. Ehrfeld, M. Abraham, U. Ehrfeld, M. Lacher, H. Lehr: "Materials for LIGA-products", Micro-Electrical Mechanical Systems: An investigation of Microstructures, Sensors, Actuators, ... / Bearb. v. W. Benecke, Hrsg. v. The Institute of Electrical and Electronic Engineers, Piscataway, NJ: IEEE Press, 1994.

Neben einer hohen Koppeleffizienz wird an eine Faserankopplung in der Regel auch die Anforderung gestellt, daß die Rückflußdämpfung möglichst hoch sein muß. Damit ist gemeint, daß ein möglichst geringer Anteil an Lichtleistung wieder in die Eingangsfaser zurückreflektiert wird. Letzteres muß vermieden werden, weil dies den Sendelaser stören und somit zu einem höheren Rauschen führen kann. Der für Anwendungen im Bereich der Telekommunikation zu erreichende Wert für die Rückflußdämpfüng (siehe Bellcore: "Generic Requirements for Fibre Optic Branching Components, GR1209, ISSUE 1, November 1994": Belcore, Morristown, 1994) liegt kleiner -55 dB.

Aus der DE 42 12 208 ist ein Verfahren zur Herstellung eines optischen Polymerbauelements bekannt, bei welchem ein Mikrostrukturkörper mittels Si-Mikromechanik und Excimerlaserbearbeitung hergestellt wird. Aus diesem Mikrostrukturkörper wird durch Galvanoformung ein Formeinsatz erzeugt, welcher zur Abformung in ein polymeres Material verwendet wird. Der Mikrostrukturkörper weist dabei eine V-förmige Faseraufnahme und einen Graben für den Wellenleiter auf.

In der US-5,343,544 wird ein integriert optischer Faserkoppler beschrieben, welcher aus einem Substrat mit Faserpositioniergräben und Wellenleiterkanälen sowie einem Deckel mit komplementären Gräben und eventuell Kanälen besteht. Die Lichtleitfaser und der Lichtwellenleiter sind durch einen Graben voneinander getrennt, der mit Kernmaterial des Lichtwellenleiters gefüllt ist. Dieses Kopplungselement kann mit Hilfe eines von einem Master galvanisch abgeformten Formwerkzeuges hergestellt werden.

In der DE 42 08 278 A1 wird ein integriertes optisches Bauelement beschrieben. Bei diesem integrierten optischen Bauelement aus Siliciumsubstrat verläuft die Glasfaser in einem eingeätzten, V-förmigen Graben. Das Auskoppeln der Lichtwelle geschieht über einen Lichtwellenleiter aus einem optischen Polymer durch Stoßkopplung. Für den Fall, daß die Querschnittsfläche des Lichtwellenleiters sehr viel geringer als diejenige der Glasfaser ist, ist vorgesehen, einen zweiten Lichtwellenleiter zwischen der Glasfaser und dem ersten Lichtwellenleiter anzuordnen. Dabei hat der zweite Lichtwellenleiter einen etwas niedrigeren Brechungsindex als der erste Lichtwellenleiter.

Aus der US-4,865,407 ist ein Kopplungselement aus Lithium-Niobat bekannt. Dieses Material ist aufwendig zu bearbeiten und gestattet keine preisgünstige Massenfertigung. Auf das Substrat aus Lithium-Niobat wird ein dünner Titanfilm aufgebracht, lithographisch strukturiert und thermisch in das Substratmaterial hineindiffundiert. Zum dem Faserende gegenüberliegenden Ende wird die Filmdicke derart variiert, daß der Brechungsindex des resultierenden Wellenleiters graduell abnimmt. Durch den abnehmenden Brechungsindex wird das im Wellenleiter geführte Licht in das Substratmaterial abgelenkt und fokussiert. Im Bereich des Fokus liegt die Grenzfläche der Faseraufnahmestruktur. Da das Licht in das Substratmaterial hinein abgelenkt wird, muß der Faserkern tiefer als der Wellenleiter liegen. Ein weiterer Nachteil besteht darin, daß die Grenzfläche nicht vertikal zur Faserachse ausgebildet ist, sondern zur Aufnahme des schräg einfallenden, aus dem Wellenleiter emittierten Lichtes geneigt ist. Entsprechend ist auch das Faserende in einem Winkel angeschnitten. Ein wesentlicher Nachteil ist darin zu sehen, daß eine solche schräge Grenzfläche, die einen Hinterschnitt aufweist, nicht auf abformtechnischem Wege hergestellt werden kann, sondern eine aufwendige feinwerktechnische Bearbeitung erfordert. Ebenso stellt das Anschrägen des Faserendes einen aufwendigen Schritt dar.

In der EP 0 560 043 B1 werden passive integrierte optische Bauelemente mit einem Formteil aus Polymermaterial beschrieben, das Lichtwellenleiterstrukturen und Faserführungsstrukturen aufweist. Hierbei handelt es sich um rechteckige Gräben, in die die Fasern eingelegt und Lichtwellenleiterkernmaterial eingebracht wird. Aufgrund der unterschiedlichen Durchmesser von Lichtwellenleiter und Lichtleitfaser besitzen die Gräben unterschiedliche Tiefen mit der Folge, daß an der Kontaktstelle, wo das Faserende an den Lichtwellenleiter angrenzt, eine Stufe vorgesehen werden muß. Ähnliche gestufte Strukturen sind aus "Precision components for optical fibre connections fabricated by the LIGA process" v. Arnd Rogner, SPIE. Vol. 1973, S. 94-100 und der EP 0 324 492 bekannt. Stegartige Strukturen finden sich nur dort, wo ausschließlich Wellenleitungstrukturen zusammengeführt werden.

Die Herstellungsverfahren sehen in der Regel vor, daß ein Substrat mit einer Stufe versehen wird, deren Höhe beispielsweise durch Diamantfräsen eingestellt wird. Im Anschluß daran wird das gestufte Substrat mit einem Resist versehen. Bei der nun folgenden Synchrotronbestrahlung wird eine Maske verwendet, deren Wellenleiterbereich und Faserbereich jeweils die Form einer rechteckigen Öffnung aufweisen. Diese Maske wird zur Stufe des Substrates so ausgerichtet, daß der Faserbereich und der Wellenleiterbereich auf der Maske mit dem späteren Faserbereich und dem Wellenleiterbereich auf dem beschichteten Substrat zur Deckung kommen. Dies bedeutet, daß der Übergang von Faserbereich und Wellenleiterbereich der Maske an der Stufe liegen muß, was eine aufwendige Positionierung der Maske erforderlich macht. Als nächster Schritt erfolgt die Bestrahlung und Entwicklung des Resists, wodurch der Fasergraben und der Wellenleitergraben entstehen. Durch Galvanoformung wird ein Formeinsatz hergestellt, der die Negativform bildet. Der Formeinsatz wird zur Herstellung des endgültigen Formteils mittels Heißprägen oder Spritzguß abgeformt. Dieses Formteil weist die entsprechenden Gräben auf, in die die Lichtleitfaser eingelegt bzw. das Wellenleitermaterial eingegossen wird.

Ein Nachteil dieses Herstellungsprozesses liegt darin, daß die Stufe exakt ausgebildet sein muß. Insbesondere darf das Substrat an der Stufenkante keinen Grat aufweisen, weil dieser einen Hinterschnitt darstellt und bei der Galvanoformung sowie der Abformung zu Zerstörungen führen kann. In diesem Fall ist dann eine gute Funktion der Kopplung von Lichtwellenleiter und Lichtleitfaser nicht mehr möglich. Je nach der Herstellungstechnik des Substrates und der Stufe ist ein solcher Grat nur unter großem Aufwand zu vermeiden. Beispielsweise tritt der Grat beim Fly-Cut-Fräsen immer dann auf, wenn der Schnitt des Fräsers vom Stufenbereich über die Kante läuft.

Ein weiterer Nachteil einer solcher Grabenstruktur besteht darin, daß beim Einfüllen von Wellenleiterkernmaterial in die Lichtwellenleiterführungsstruktur das Material in die Führungsstruktur für die Glasfaser abfließen kann, so daß das Fasereinbettmaterial und das Wellenleiterkernmaterial nicht unabhängig voneinander gewählt werden können.

Schließlich muß die Faser zur Minimierung von Rückreflexionen mit einer schrägen Endfläche versehen werden.

Aus Patent Abstracts of Japan Vol. 1995, No. 02, 31. März 1995 (1995-03-31) & JP 06313823 A (Kyocera Corp.), 8. November 1994 (1994-11-08) ist ein Trägerelement für einen Lichtwellenleiter bekannt, der an seiner Stirnfläche eine halbkugelförmige Ausnehmung aufweis, in die zur Ankopplung einer Lichtleitfaser ein transparentes Material eingefüllt wird.

Es ist daher Aufgabe der Erfindung, ein Kopplungselement zu schaffen, das einfach herzustellen ist, im Kopplungsbereich eine die Kopplung nicht beeinträchtigende Struktur aufweist und bei dem Lichtleiterkernmaterial und Einbettmaterial unabhängig voneinander gewählt werden können.

Diese Aufgabe wird mit einem optischen Kopplungselement gelöst, bei dem im Kopplungsbereich zwischen dem Führungsgraben des Lichtwellenleiters und dem Führungsgraben der Lichtleitfaser ein Steg aus Wellenleitermantelmaterial als integraler Bestandteil des Kopplungselementes angeordnet ist.

Ausgangspunkt der Lösung war die Erkenntnis, daß man Lichtleitfaser und Lichtwellenleiter nicht direkt aneinander anschließen läßt, sondern sie in axialer Richtung um eine Strecke zueinander versetzt. Es wurde gefunden, daß im Gegensatz zu einem lateralen Versatz oder einem Winkelfehler sich ein axialer Versatz nur geringfügig auf die Koppeldämpfung auswirkt. Überraschend wurde festgestellt, daß diese geringe Kopplungsdämpfung sowohl im Bereich der Single-Mode-Technik, als auch bei der Multi-Mode-Technik gilt, falls die Abmessungen und Brechzahlen des Wellenleiters geeignet gewählt werden.

Dadurch, daß die Lichtleitfaser und der Lichtwellenleiter nicht unmittelbar aneinanderstoßen, sondern durch einen Steg voneinander getrennt sind, wird bei der Herstellung die kritische Kante des gestuften Substrats, z.B. der bereits erwähnte Grat, durch den Steg verdeckt, wodurch eine wesentlich einfachere Herstellung ermöglicht wird.

Die Trennung von Lichtwellenleiter und Lichtleitfaser durch den Steg bietet ferner eine größere Wahlfreiheit für das Wellenleiterkernmaterial und das Einbettmaterial der Lichtleitfaser.

So kann bei Kopplern nach dem Stand der Technik das Einbettmaterial nur gleich dem Wellenleiterkernmaterial gewählt werden. Hierdurch tritt bereits an der Grenzfläche zwischen Lichtleitfaser und seinem Einbettmaterial eine Reflexion auf, so daß der reflektierte Anteil nur durch ein vergleichsweise aufwendiges Anschrägen der Lichtleitfaser umgelenkt werden kann. Mit dem erfindungsgemäßen Kopplungselement kann das Einbettmaterial so gewählt werden, daß der Brechungsindex nur in etwa gleich dem des Faserkernmaterials zu sein braucht. Die noch verbleibende Reflexion an der Grenzfläche zwischen Fasereinbettmaterial und Steg (Wellenleitermantelmaterial) kann durch eine angeschrägte Fläche des Steges umgelenkt werden.

Der Steg bietet somit unter anderem den Vorteil, daß eine oder beide Flächen des Stegs eine Struktur aufweisen können, so daß eine Endbearbeitung beispielsweise der Lichtleitfaser nicht erforderlich ist.

Durch die Verwendung zweier unterschiedlicher Materialien besteht weiterhin der Vorteil, daß das Fasereinbettmaterial bezüglich Klebe- und Festigkeitseigenschaften und das Wellenleiterkermnaterial bezüglich optischer Transparenz ausgesucht werden kann. Ein Übertreten der betreffenden Materialien in den jeweils anderen Führungsgraben wird durch den Steg verhindert.

Vorzugsweise weist die dem Führungsgraben der Lichtleitfaser zugewandte Fläche des Stegs (Lichteintrittsfläche) eine schräge Fläche auf, die mit einer parallel zur Oberfläche des Kopplungselementes liegenden Senkrechten auf der Längsachse dieses Führungsgrabens einen Winkel ϕ zwischen 2 und 10° einschließt. Vorzugsweise liegt die Senkrechte in der Ebene des optischen Kopplungselementes, so daß die schräge Fläche in Draufsicht auf das Kopplungselement erkennbar ist. Die Breite und Höhe der schrägen Fläche ist vorzugsweise größer gleich dem Durchmesser des Kerns der Lichtleitfaser, dem die schräge Fläche zugewandt ist. Durch die geeignete Winkelwahl der schrägen Fläche wird die Rückreflexion in die Lichtleitfaser unterdrückt. Eine Anschrägung der Stirnfläche der Lichtleitfaser kann somit entfallen.

Unabhängig oder zusätzlich zu der Ausgestaltung der Lichteintrittsfläche kann die dem Führungsgraben des Lichtwellenleiters zugewandte Fläche des Stegs (Lichtaustrittsfläche) mit einer parallel zur Oberfläche des Kopplungselements liegenden Senkrechten auf der Längsachse des Führungsgrabens der Lichtleitfaser einen Winkel ξ zwischen 0,1° und 2° bilden. Dies bedeutet, daß die beiden Längsachsen der Führungsgräben von Lichtleitfaser und Lichtwellenleiter ebenfalls den Winkel ξ einschließen. Dies führt zu einer abgeknickten Anordnung, wobei der Winkel ξ auf den Winkel ϕ unter Berücksichtigung der Brechzahlen der eingesetzten Materialien eingestellt wird. Dadurch wird eine optimale Koppeleffizienz erreicht.

Vorteilhafterweise ist die Führungsstruktur für den Lichtwellenleiter zur Lichtaustrittsfläche hin erweitert, um den sich durch den Steg ausbildenden Lichtkegel vollständig in den Kern des Lichtwellenleiters überführen zu können.

Gemäß einer weiteren Ausführungsform können mehrere Führungsgräben fiir Lichtwellenleiter und Lichtleitfasern nebeneinander angeordnet sein. Bei dieser Ausführungsform ist ein gemeinsamer Steg quer zu den Führungsgräben vorgesehen, wobei sowohl die Führungsgräben für die Lichtleitfasern als auch die Führungsgräben für die Lichtwellenleiter über jeweils mindestens einen parallel zum Steg angeordneten Quergraben miteinander verbunden sind. Solche Quergräben erhöhen die Stabilität und mechanische Festigkeit des bei der Herstellung verwendeten Formeinsatzes und dienen zur Schrumpfbegrenzung bei der Abformung.

Vorzugsweise sind die Führungsgräben für den bzw. die Lichtwellenleiter als auch die Führungsgräben für die Lichtleitfaser bzw. die Lichtleitfasern sowie der Steg einstückig abformtechnisch aus polymerem Material gefertigt.

Es hat sich als voteilhaft erwiesen, die Stegdicke kleiner als 100 µm, bevorzugt kleiner als 50 µm, zu wählen.

Beispielhafte Ausführungsformen der Erfindung werden nachfolgend anhand der Zeichnungen näher erläutert.

Es zeigen:
- Fig. 1: eine perspektivische Darstellung eines Kopplungselementes,
- Fig. 2: eine perspektivische Darstellung eines Substrates mit Resist und Maske fiir die Bestrahlung,
- Fig. 3: eine Draufsicht auf das in der Fig. 1 gezeigte Kopplungselement zur Erläuterung des Strahlengangs,
- Fig. 4: eine perspektivische Darstellung einer weiteren Ausführungsform eines Kopplungselementes und
- Fign.5a+5b: Skizze und Diagramm zur Erläuterung der Dämpfung in Abhängigkeit vom axialen Versatz.

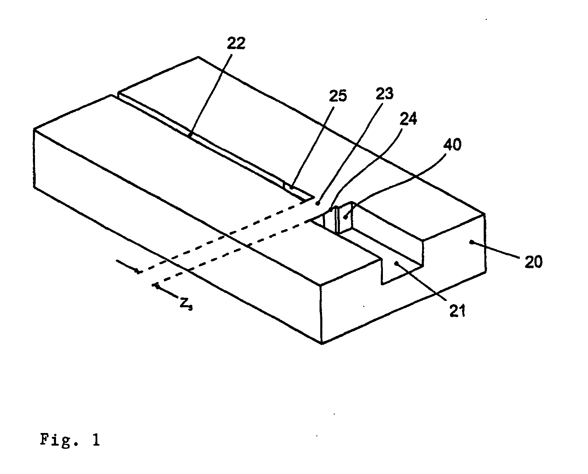

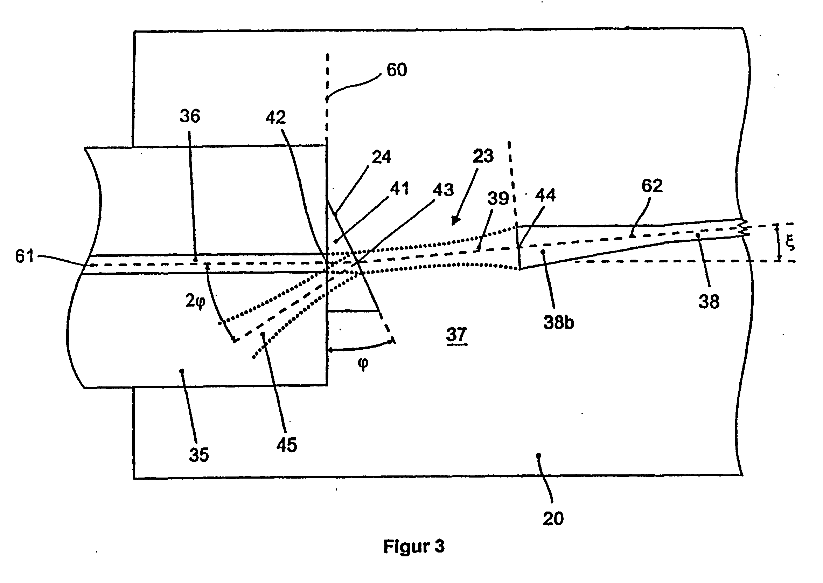

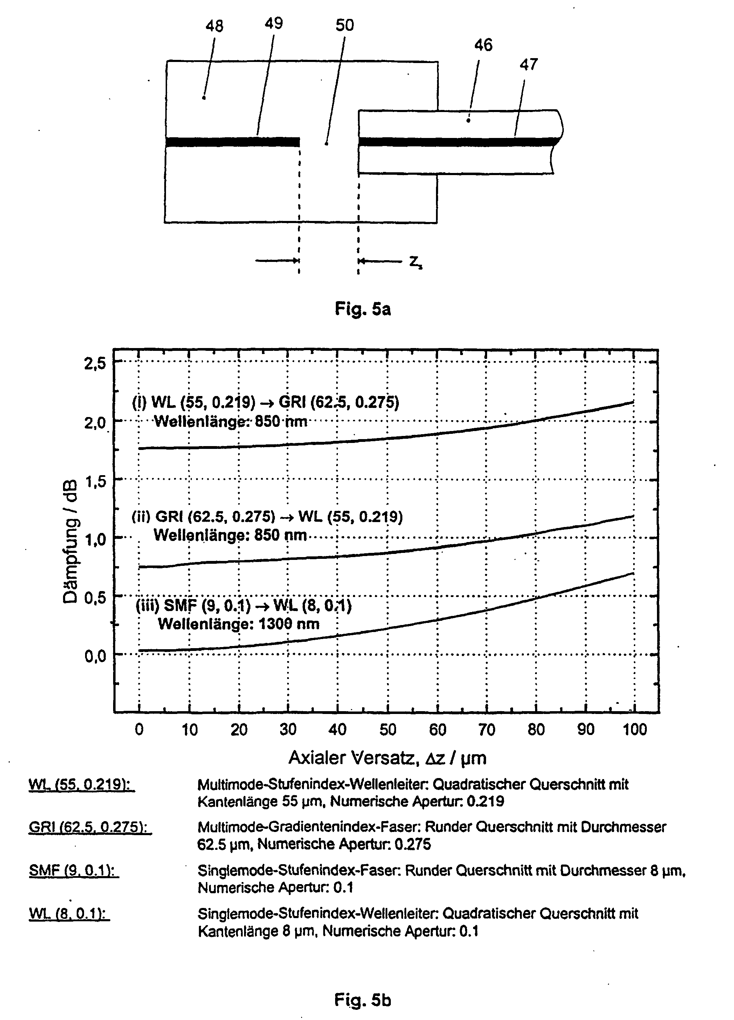

Die Fig. 1 zeigt ein Kopplungselement 20 mit Führungsgräben in Form eines Fasergrabens 21 und eines Wellenleitergrabens 22. Fasergraben 21 und Wellenleitergraben 22 schließen nicht direkt aneinander an, sondern sind durch einen Steg 23 voneinander getrennt. Die Breite des Steges zₛ (s. Fig. 5a) liegt im Bereich von 5 - 100 µm. Der Wellenleitergraben 22 verbreitert sich in Richtung des Stegs 23, was als Taper 25 bezeichnet wird, durch welchen erreicht wird, daß das beim Durchgang durch den Steg 23 sich aufweitende optische Feld durch den Wellenleiterkern besser aufgenommen werden kann, was noch im Zusammenhang mit der Fig. 3 näher erläutert wird.

Der Steg 23 weist an seiner dem Fasergraben 21 zugewandten Fläche 40 (Lichteintrittsfläche) eine schräge Fläche 24 auf, welche beispielsweise um einen Winkel von ϕ gleich 8° gegenüber der Senkrechten 60 (s. Fig. 3) auf der Längsachse 61 der Faserführungsstruktur geneigt angeordnet ist. Wie in der Fig. 3 dargestellt ist, wird die gesamte Lichteintrittsfläche durch die schräge Fläche 24 gebildet. Die schräge Fläche 24 ist in horizontaler Richtung geneigt und erstreckt sich über die gesamte Tiefe des Grabens 21. Durch diese schräge Fläche 24 wird erreicht, daß von der Lichteintrittsfläche 40 rückreflektiertes Licht nicht in die Lichtleitfaser zurückläuft. Dies ist insbesondere dann besonders vorteilhaft, wenn zum Einbetten der Lichtleitfaser ein Material verwendet wird, dessen Brechungsindex in etwa gleich dem des Kernmaterials der Lichtleitfaser ist.

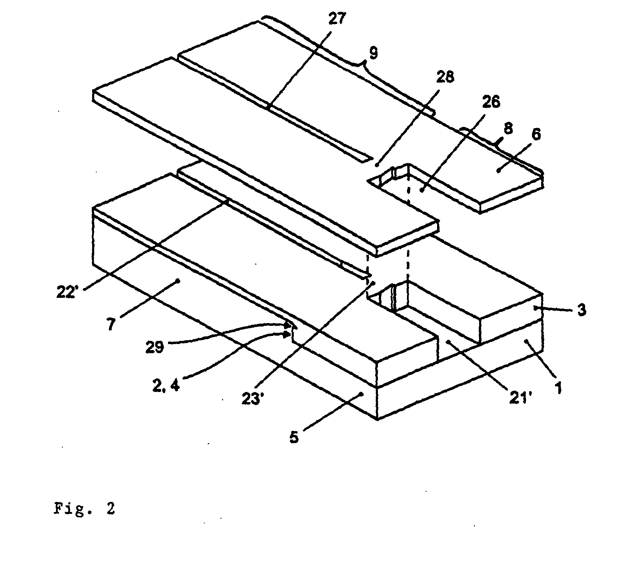

Die Herstellung des Kopplungselementes 20 erfolgt vorzugsweise mittels einer Kombination aus LIGA- und Feinwerktechnik und wird im folgenden zur Herstellung einer Kopplung zwischen einer Standard-Singlemodefaser (Faserdurchmesser; 125 µm, Faserkerndurchmesser: ca. 8 µm) und einem quadratischen Singlemode-Wellenleiter mit Kantenlänge 8 µm zusammen mit Fig. 2 beschrieben. Ausgangspunkt dafür ist das Substrat 1 mit einer Stufe 4, deren Höhe z.B. durch Diamantfräsen sehr genau auf h₀ = 58,5 ± 1 µm eingestellt wird. Im Anschluß wird dieses mit Resist 3 beschichtet und dabei die Resisthöhe durch Polieren so eingestellt, daß sie im tiefen Faserbereich 5 h₂ = 66,5 µm und im flachen Wellenleiterbereich 7 h₁ = 8 µm beträgt. Bei der nun folgenden Synchrotron-Bestrahlung wird eine Maske 6 verwendet, die einen Wellenleiterbereich 9 und einen Faserbereich 8 aufweist, die durch einen Steg 28 voneinander getrennt sind. Die Maske weist Strukturen für Wellenleitergraben 27 in Form einer rechteckigen Öffnung mit d₁ = 8 µm und für Fasergraben 26 in Form einer rechteckigen Öffnung mit d₂ = 125 µm auf. Diese Maske 6 wird zur Substratstufe 4 so ausgerichtet, daß Faserbereich 8 und Wellenleiterbereich 9 auf der Maske 6 mit Faserbereich 5 und Wellenleiterbereich 7 auf dem beschichteten Substrat zur Deckung kommen. Als nächster Schritt folgt Bestrahlung und Entwicklung des Resists, wodurch Fasergraben 21' und Wellenleitergraben 22' entstehen, welche durch den Steg 23' voneinander getrennt sind. Durch das Vorstehen des Stegs 23' ergibt sich nun der Vorteil, daß ein herstellungsbedingter Grat 29 an der Stufe 4 des Substrates 1 in den Bereich des Stegs 23' fällt und somit vollständig durch den Resist 3 verdeckt wird. In diesem Fall ergibt sich das Ende des Fasergrabens 21' als Abbild der auf der Maske 6 vorgesehenen Absorberstruktur und nicht durch die Seitenfläche 2 der Substratstufe 4. Dadurch wird das Herstellungsverfahren deutlich vereinfacht und herstellungsbedingte Probleme am Substrat 1 können die Kopplung von Lichtleitfaser und Lichtwellenleiter nicht beeinflussen. Wie aus der LIGA-Technik bekannt, folgt im Anschluß die Herstellung eines Formeinsatzes durch Galvanoformung sowie dessen Abformung durch Heißprägen oder Spritzguß. Abschließend wird die Lichtleitfaser in den Fasergraben 21 des Kopplungselementes 20 (s. Fig. 1) eingelegt und das Wellenleiterkernmaterial in den Wellenleitergraben 22 eingebracht.

Mit diesem Herstellungsverfahren kann eine Genauigkeit der Ausrichtung des Wellenleitergrabens 22 auf den Fasergraben 21 von kleiner 1 µm erreicht werden.

In der Fig. 3 wird die optische Funktionsweise der Kopplung im Detail dargestellt. Im Kopplungselement 20 sind das Fasermantelmaterial 35, der Faserkern 36, das Wellenleitermantelmaterial 37 und der Wellenleiterkern 38 dargestellt. Das gesamte Kopplungselement 20 besteht aus Wellenleitermantelmaterial. Das dem Steg 23 zugewandte Ende des Wellenleiters ist als Taper 38b verbreitert. Zudem befindet sich vor der Faserstirnfläche 42 die schräge Fläche 24 des Stegs 23. Der Raum zwischen Faserende und der schrägen Fläche 24 ist mit einem Fasereinbettmaterial 41 ausgefüllt. Aus dem Faserkern 36 tritt der Lichtkegel 39 aus, der an der schrägen Fläche 24 gebrochen wird und sich im folgenden aufweitet. Durch den am vorderen Ende verbreiterten Wellenleiter 38 wird dieser Lichtkegel vollständig aufgenommen. Der anschließende Taper 38b bewirkt, daß das Feld wieder auf seine ursprüngliche Breite zurücktransformiert wird.

Die Größe des Brechungswinkels ξ hängt nach dem Snellius'schen Brechungsgesetz vom Winkel ϕ sowie den Brechzahlen von Fasereinbettmaterial und Wellenleitermaterial ab. Besonders vorteilhaft ist es, den Wellenleiterkern 38 so schräg anzuordnen, daß seine Längsachse 62 mit der des gebrochenen Lichtkegels 39 übereinstimmt. Dies bedeutet, daß die dem Wellenleiter 38 zugewandte Lichtaustrittsfläche 44 des Stegs 23 ebenfalls schräg angeordnet ist. Auf diese Weise wird eine optimale Koppeleffizienz erreicht.

Für die Stärke der Rückreflexion ist es wichtig, daß das Licht vom Faserkern 36 zum Wellenleiter 38 mehrere Grenzflächen passiert. Nacheinander sind dies die Grenzfläche (Faserstirnfläche 42) zwischen Faserkern 36 und Fasereinbettmaterial 41, die schräge Grenzfläche 43 zwischen Fasereinbettmaterial 41 und Wellenleitermantel 37 sowie die Grenzfläche (Lichtaustrittsfläche 44) zwischen Wellenleitermantel 37 und Wellenleiterkern 38. Prinzipiell gilt, daß die Rückreflexion an den einzelnen Grenzflächen umso größer ist, je mehr die Brechzahlen auf beiden Seiten der Grenzfläche voneinander abweichen. Da die Materialien für Wellenleitermantel 37 und Kern 38 in der Regel nach ihrer optischen Transparenz sowie ihren Verarbeitungseigenschaften ausgesucht werden, ist ihr Brechungsindex bereits festgelegt. Ein typisches Material für den Wellenleitermantel ist beispielsweise PMMA mit einem Brechungsindex von 1,49, der sich vom Brechungsindex des Lichtleitfasermantels von 1,45 deutlich unterscheidet. Besonders vorteilhaft ist es, für das Fasereinbettmaterial 41 ein vom Wellenleiterkern 38 verschiedenes Material zu verwenden, welches vorteilhaft den gleichen Brechungsindex wie der Faserkern 36 aufweist. Dies hat zur Folge, daß an der zugehörigen Grenzfläche (Faserstirnfläche) 42 praktisch keine Rückreflexionen auftreten. Das gleiche gilt für die Lichtaustrittsfläche 44, da die Brechzahlen von Wellenleiterkern und Wellenleitermantel in der Regel nahe beieinander liegen. Der Hauptteil der Reflexion tritt somit an der Grenzfläche 43 auf und es entsteht der Lichtkegel 45. Dieser ist entsprechend dem Reflexionsgesetz gegenüber der Faserendfläche um den Winkel 2ϕ geneigt. Besonders vorteilhaft ist es nun, den Winkel ϕ so groß (z.B. ϕ=4°) zu wählen, daß das rückreflektierte Licht nicht mehr vom Faserkern aufgenommen werden kann und daher keine Rückreflexion in die Lichtleitfaser stattfindet.

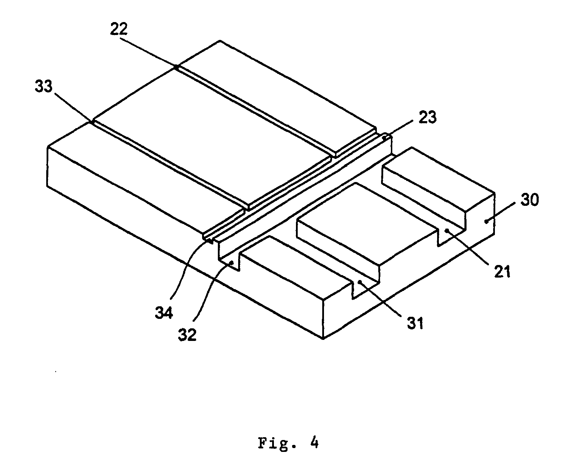

Eine weitere vorteilhafte Ausgestaltung der Erfindung ist in der Fig. 4 dargestellt. Das perspektivisch dargestellte Koppelelement 30 weist mehrere nebeneinander liegende Fasergräben auf, von denen die Fasergräben 21 und 31 zu sehen sind. Beide Fasergräben 21 und 31 sind durch einen querverlaufenden Graben 32 miteinander verbunden. Das entsprechende gilt auch für die nebeneinander liegenden Wellenleitergräben 22 und 33, welche durch den ebenfalls querverlaufenden Graben 34 miteinander verbunden sind. Diese Ausgestaltung hat den Vorteil, daß sich die Montage erheblich vereinfacht, weil sich das Kernmaterial beim Einbringen in die Führungsstruktur besser verteilen kann und somit die Gefahr ungefüllter Räume verkleinert wird. Dies trifft auch insbesondere dann zu, wenn zwei verschiedene Materialien für den Wellenleiterkern und zum Einbetten der Lichtleitfaser verwendet werden sollen. Ein weiterer Vorteil ist darin zu sehen, daß durch die Quergräben 32 und 34 eine höhere Stabilität und mechanische Festigkeit des Formeinsatzes erreicht wird und daß die Quergräben 32 und 34 zur Schrumpfbegrenzung bei der Abformung dienen.

Die Fign. 5a,b zeigen die Faser-Wellenleiter-Koppelverluste als Funktion des axialen Versatzes zₛ. Die der Rechnung zugrundeliegende Geometrie ist in Fig. 5a dargestellt. Lichtleitfaser 46 mit Faserkern 47 und Wellenleiter mit Mantel 48 und Kern 49 sind um die Strecke zₛ voneinander entfernt. Zwischen Faserund Wellenleiterende liegt das Wellenleitermantelmaterial 50 mit dem Brechungsindex 1.49. Die Ergebnisse in Fig. 5b sind für drei typische Anwendungsfälle berechnet.
(i) zeigt die Kopplung von einem quadratischen Stufenindex-Wellenleiter mit Kantenlänge 55 µm und einer numerischen Apertur von 0,219 in eine Gradientenindexfaser mit Kerndurchmesser 62,5 µm und einer numerischen Apertur von 0,275.
(ii) zeigt die Kopplung in der umgekehrten Richtung, d.h. von der Gradientenindexfaser in den Wellenleiter. In beiden Fällen wurde den Rechnungen eine Wellenlänge von 850 nm zugrundegelegt, welche typischerweise für Multi-Mode-Systeme im Bereich von Kurzstreckenverbindungen eingesetzt wird. Überraschend erfolgt der Anstieg der Dämpfung in beiden Fällen langsam und ist beispielsweise für zₛ = 100 µm kleiner 2,5 dB.
(iii) zeigt die Kopplung von einer Singlemode-Faser mit Kerndurchmesser 9 µm und einer numerischen Apertur von 0,1 in einen quadratischen Stufenindex-Wellenleiter mit 8 µm Kerndurchmesser und einer numerischen Apertur von 0,1. Für die Kopplung in umgekehrter Richtung erhält man dasselbe Ergebnis. Der Rechnung wurde eine Wellenlänge von 1300 nm zugrundegelegt, welche typischerweise im Bereich der Telekommunikation für Langstreckenverbindungen eingesetzt wird. Der Anstieg der Dämpfung erfolgt langsam und ist beispielsweise für zₛ =100 µm kleiner 0,75 dB.

### Bezugszeichen

- 1: Substrat
- 2: Seitenfläche
- 3: Resist
- 4: Stufe
- 5: Faserbereich (Substrat)
- 6: Maske
- 7: Wellenleiterbereich (Substrat)
- 8: Faserbereich (Maske)
- 9: Wellenleiterbereich (Maske)
- 20: Kopplungselement
- 21: Fasergraben
- 21': Fasergraben
- 22: Wellenleitergraben
- 22': Wellenleitergraben
- 23: Steg
- 23': Steg
- 24: schräge Fläche
- 25: Taper
- 26: Fasergrabenstruktur
- 27: Lichtwellenleiterstruktur
- 28: Steg
- 29: Grat
- 30: Kopplungselement
- 31: Fasergraben
- 32: Quergraben
- 33: Wellenleitergraben
- 34: Quergraben
- 35: Fasermantel
- 36: Faserkern
- 37: Wellenleitermantel
- 38: Wellenleiterkern
- 38b: Taper
- 39: Lichtkegel
- 40: Lichteintrittsfläche
- 41: Fasereinbettmaterial
- 42: Faserstirnfläche
- 43: Grenzfläche
- 44: Lichtaustrittsfläche
- 45: Lichtkegel
- 46: Lichtleitfaser
- 47: Faserkern
- 48: Lichtwellenleitermantel
- 49: Lichtwellenleiterkern
- 50: Lichtwellenleitermantelmaterial
- 60: Senkrechte
- 61: Längsachse
- 62: Längsachse

## Patentansprüche

1. Optisches Kopplungselement, das einstückig abformtechnisch aus polymerem Wellenleitermantelmaterial gefertigt ist, mit mindestens je einem Führungsgraben für einen Lichtwellenleiter und eine Lichtleitfaser, **dadurch gekennzeichnet,**
**daß** im Kopplungsbereich zwischen dem Führungsgraben (22) des Lichtwellenleiters und dem Führungsgraben (21) der Lichtleitfaser ein Steg (23) aus Wellenleitermantelmaterial als integraler Bestandteil des Kopplungselementes angeordnet ist.

2. Kopplungselement nach Anspruch 1, **dadurch gekennzeichnet, daß** die dem Führungsgraben (21) der Lichtleitfaser zugewandte, die Lichteintrittsfläche bildende Fläche (40) des Stegs (23) eine schräge Fläche (24) aufweist, die mit einer parallel zur Oberfläche des Kopplungselementes (20) liegenden Senkrechten (60) auf der Längsachse (61) dieses Führungsgrabens einen Winkel ϕ zwischen 2 und 10° einschließt.

3. Kopplungselement nach einem der Ansprüche 1 oder 2, **dadurch gekennzeichnet, daß** die dem Führungsgraben (22) des Lichtwellenleiters zugewandte, die Lichtaustrittsfläche bildende Fläche (44) des Stegs (23) mit einer parallel zur Oberfläche des Kopplungselementes (20) liegenden Senkrechten (60) auf der Längsachse (61) des Führungsgrabens (21) der Lichtleitfaser einen Winkel 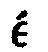 zwischen 0,1° und 2° bildet.

4. Kopplungselement nach einem der Ansprüche 1 bis 3, **dadurch gekennzeichnet, daß** der Führungsgraben (22) für den Lichtwellenleiter sich zur Lichtaustrittsfläche (44) hin erweitert.

5. Kopplungselement nach einem der Ansprüche 1 bis 4, **dadurch gekennzeichnet, daß** jeweils mehrere Führungsgräben (21,22,31,33) für Lichtwellenleiter und Lichtleitfasern nebeneinander angeordnet sind,
daß sich ein gemeinsamer Steg (23) quer zu den Führungsgräben (21,22,31,33) erstreckt und
daß sowohl die Führungsgräben (21,31) für die Lichtleitfasern als auch die Führungsgräben (22,33) für die Lichtwellenleiter über jeweils mindestens einen parallel zum Steg (23) angeordneten Quergraben (32,34) miteinander verbunden sind.

6. Kopplungselement nach einem der Ansprüche 1 bis 5, **dadurch gekennzeichnet, daß** die Stegdicke < 100 µm, vorzugsweise <50 µm, beträgt.

## Claims

1. An optical coupling element made in single-piece moulding technology from polymer waveguide cladding material, comprising at least one guide channel each for an optical waveguide and a fibre-optic waveguide, **characterised in that** in the coupling region between the guide channel (22) of the optical waveguide and the guide channel (21) of the fibre-optic waveguide, a bridge (23) made of waveguide cladding material is arranged as an integral part of the coupling element.

2. The optical coupling element according to claim 1, **characterised in that** the surface (40) of the bridge (23), which surface (40) faces the guide channel (21) of the fibre-optic waveguide, comprises an inclined surface (24), which on the longitudinal axis (61) of this guide channel forms an angle ϕ of between 2° and 10° to a perpendicular line (60) which extends parallel to the surface of the coupling element (20).

3. The coupling element according to one of claims 1 or 2, **characterised in that** the surface (44) of the bridge (23), which surface (44) faces the guide channel (22) of the optical waveguide and which surface (44) forms the light exit surface, is arranged at an angle ξ of between 0.1° and 2° to a perpendicular line (60) which extends parallel to the surface of the coupling element (20) on the longitudinal axis (61) of the guide channel (21) of the fibre-optic waveguide.

4. The coupling element according to one of claims 1 to 3, **characterised in that** the guide channel (22) for the optical waveguide widens towards the light exit surface (44).

5. The coupling element according to one of claims 1 to 4, **characterised in that** several guide channels (21, 22, 31, 33) for optical waveguides and fibre-optic waveguides are arranged side-by-side;
**in that** a common bridge (23) extends transversely to the guide channels (21, 22, 31, 33); and
**in that** both the guide channels (21, 31) for the fibre-optic waveguides and the guide channels (22, 33) for the optical waveguides are interconnected via at least one transverse channel (32, 34) which is arranged parallel to the bridge (23).

6. The coupling element according to one of claims 1 to 5, **characterised in that** the thickness of the bridge is <100 µm, preferably <50 µm.

## Revendications

1. Elément de couplage optique, fabriqué de façon intégrale par une technique de moulage dans un matériau polymère de gaine de guide d'ondes, comprenant au moins respectivement une tranchée de guidage pour un guide d'ondes lumineuses et une fibre optique, **caractérisé en ce que** dans la zone de couplage entre la tranchée de guidage (22) du guide d'ondes lumineuses et la tranchée de guidage (21) de la fibre optique, une moulure (23) en matériau de gaine de guide d'ondes est agencée comme une partie intégrante de l'élément de couplage.

2. Elément de couplage selon la revendication 1, **caractérisé en ce que** la face (40) de la moulure (23), orientée vers la tranchée de guidage (21) de la fibre optique et formant la surface d'entrée de lumière présente une surface inclinée (24) qui inclut avec une verticale (60) située en parallèle à la surface de l'élément de couplage (20) sur l'axe longitudinal (61) de cette tranchée de guidage un angle ϕ entre 2° et 10°.

3. Elément de couplage selon l'une quelconque des revendications 1 ou 2, **caractérisé en ce que** la face (44) de la moulure (23), orientée vers la tranchée de guidage (22) du guide d'ondes lumineuses et formant la surface de sortie de lumière forme avec une verticale (60) située en parallèle à la surface de l'élément de couplage (20) sur l'axe longitudinal (61) de la tranchée de guidage (21) de la fibre optique un angle ε entre 0,1° et 2°.

4. Elément de couplage selon l'une quelconque des revendications 1 à 3, **caractérisé en ce que** la tranchée de guidage (22) pour le guide d'ondes lumineuses s'élargit en direction de la surface de sortie de lumière (44).

5. Elément de couplage selon l'une quelconque des revendications 1 à 4, **caractérisé en ce que** respectivement plusieurs tranchées de guidage (21, 22, 31, 33) pour des guides d'ondes lumineuses et des fibres optiques sont agencées les unes à côté des autres, **en ce qu'**une moulure commune (23) s'étend transversalement aux tranchées de guidage (21, 22, 31, 33), et **en ce qu'**à la fois les tranchées de guidage (21, 31) pour les fibres optiques et les tranchées de guidage (22, 33) pour les guides d'ondes lumineuses sont reliées ensemble par respectivement au moins une tranchée transversale (32, 34) agencée en parallèle à la moulure (23).

6. Elément de couplage selon l'une quelconque des revendications 1 à 5, **caractérisé en ce que** l'épaisseur de moulure est < 100 µm, de préférence < 50 µm.
